# EUROPEAN PATENT SPECIFICATION

(11) **EP 3 301 819 B1**
(45) Date of publication and mention of the grant of the patent: **26.06.2019**
(21) Application number: 16191123.5
(22) Date of filing: 28.09.2016
(51) Int. Cl.: H04B 1/40, G06F 13/42, H04B 1/403

(54) **SEPARATE PARALLEL COMMUNICATION LINKS BETWEEN A BASEBAND PROCESSING DEVICE AND AN RF DEVICE**
GETRENNTE PARALLELE KOMMUNIKATIONSVERBINDUNGEN ZWISCHEN EINER BASISBANDVERARBEITUNGSVORRICHTUNG UND EINER HOCHFREQUENZVORRICHTUNG
CONNEXIONS SÉPARÉES ET PARALLELS DE COMMUNICATION ENTRE UN DISPOSITIF DE TRAITEMENT DE BANDE DE BASE ET UN DISPOSITIF DE FRÉQUENCE RADIO

(43) Date of publication of application: 04.04.2018
(73) Proprietor: Intel IP Corporation, Santa Clara, CA 95054 (US)
(72) Inventor: Meixner, Michael, 81667 München (DE)
(74) Representative: 2SPL Patentanwälte PartG mbB

(56) References cited:
- EP-A2- 0 720 304
- US-A1- 2004 204 096
- US-A1- 2004 228 395
- US-A1- 2006 013 324
- US-A1- 2007 054 629
- US-A1- 2012 203 943

## Description

### Field

Examples relate to a baseband processing device, a radio frequency device, a baseband processing apparatus, a radio frequency apparatus, a modem, a radio transceiver, a mobile terminal, methods and computer programs for baseband processing and for radio frequency processing, and in particular, but not exclusively, to an interface concept between a baseband processing part and a radio frequency processing part of a radio transceiver.

### Background

Modems of radio communication devices may comprise components for baseband processing and components for radio frequency processing. For example, chipsets of a cellular modem may comprise (at least) a baseband chip and (at least) a Radio Frequency (RF) transceiver chip. As a result, data is exchanged between both chips. This data can be distinguished into control plane data (carrying control information, such as protocol information, link control information, etc.) and data plane data (essentially carrying a digital representation of the antenna signals, e.g. payload data). Due to the nature of at least some digital interface standards a portion of the overall data traffic contains protocol or signaling overhead for link management.

Document US 2004/0228395 A1 discloses a concept for using digital unidirectional differential links between a baseband component and radio-frequency component. Document US 2004/0204096 A1 discloses a digital interface for a wireless communication system with a reduced number of connectors. Document US 2012/0203943 A1 describes a radio communication device enabling a serial interface to restart transmission in a short time when interface setting is changed. Document US 2006/0013324 A1 discloses an interface between a baseband component and a radio-frequency component, which is realized by an exclusively digital interface for a reception and a transmission path. Document EP 0 720 304 A2 describes a portable radio apparatus, which comprises an apparatus body and a removable radio system unit, which is detachably connected to the apparatus body. Document US 2007/0054629 A1 discloses components of a radio-frequency (RF) apparatus including transceiver circuitry and frequency modification circuitry of a crystal oscillator circuit that generates a reference signal with adjustable frequency. The components may be partitioned in a variety of ways, for example, as one or more separate integrated circuits.

### Brief description of the Figures

Some examples of apparatuses, methods and/or computer programs will be described in the following by way of example only, and with reference to the accompanying figures, in which
Fig. 1 illustrates examples of a baseband processing device or apparatus, a radio frequency device or apparatus, and a modem;
Fig. 2 shows a timing diagram of a communication in an example;
Fig. 3 depicts an eye-diagram or eye-pattern in an example;
Fig. 4 shows a block diagram of an example mobile communication system with a base station transceiver and a mobile transceiver comprising example modems; and
Fig. 5 shows a block diagram of an example method for exchanging data between a baseband apparatus and a radio frequency apparatus of a mobile communication modem.

### Detailed Description

The invention is defined by the appended claims.

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used then using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

Common digital interfaces carrying sampled RF data have certain requirements on Bit Error Rate (BER), which are orders of magnitude higher compared to the quality of the actual RF data to be exchanged. It is a finding that a separated payload data transmission on such an interface would allow for relaxed BER. It is a further finding that payload data or in general data having the same BER requirement could be combined in groups of data with the same or similar requirement. Examples can therefore be based on a clear split of control plane and data plane. Payload data transmitted in the data plane is subject to transmission on the air interface (RF-transmission) and therefore subject to transmission errors evoked by the effect of the radio channel. Some examples of these effects are fast fading, slow fading, interference, multipath propagation, Doppler shift, etc. BER requirements for air interface payload transmissions may typically range in the area of 10⁻²-10⁻⁴, etc. BER requirements for control plane data transmitted between baseband and RF-components in a modem may be significantly lower, e.g. 10⁻¹⁰-10⁻¹⁵. Examples therefore consider a split of control and payload data on the respective interface and may adapt transmission settings for control and payload data separately. This may allow better complying to the different BER requirements and may enable reduced energy or power consumption for operating said interface.

Some examples may provide an interface that might not require any additional protocol or headers on the data lanes in order to make substantial use of power savings by means of degrading the link quality. The split of control and payload data may enable power savings. "Control" may refer to the protocol stack and RF driver related control plane. For example, some of the control information may refer to synchronization of operating modes and use cases between baseband and RF components of a modem. Such information may relate to timing information on when transmissions start and end, data rate settings, steering information between transmitter and receiver to coordinate data transfer, etc. Other control information may relate to link management, e.g. packet size or format information how large (how many bits or bytes) are comprised in a data packet, sequence numbers, etc.

In some of the examples discussed in the following, digital or analogue interfaces discussed in this matter may be decoupled from the real time domain, because the sampling of the carried RF data might not be synchronized to an underlying reference clock. Data packets are transported over the interface. Examples may completely avoid any protocol or header information on the data lanes. The essence of this protocol or header information is moved to a separate control link between the two peers in the form of e.g. time-stamps referring to a shared interface clock, lane-data-mapping, data-rates etc. In some implementations or examples a separate control link may already exist and may carry a protocol stack and RF driver related control plane and may, according to an example, also carry control information that used to be exchanged on data lines.

In the following examples of baseband processing devices and radio frequency processing devices will be described, corresponding apparatuses, methods and computer programs, respectively. An interface between these two components will be described, which allows separating payload and control data on different links or lanes, respectively. A baseband processing device is assumed to be configured to process any kind of baseband data, which has been received or which is to be transmitted in an RF transmission band or transmission band. Such baseband processing may include one or more elements of the group of baseband filtering, signal detection, coding/decoding, etc. The RF device converts a baseband signal into the RF transmission band signal and vice versa. Typical processing steps carried out at the RF device may therefore be one or more elements of the group of up- and/or down-conversion, analog-to-digital conversion, digital-to-analog conversion, mixing, filtering, amplifying (low-noise- and/or power-amplifying), diplexing, duplexing, etc.

Typical components that could be comprised in the baseband device are one or more processors, one or more Digital-Signal-Processors (DSPs), one or more filters, converters, etc. Typical components that could be comprised in the RF device are one or more processors, one or more Digital-Signal-Processors (DSPs), one or more filters, one or more mixers, one or more amplifiers (Low Noise Amplifiers (LNA) and/or Power Amplifiers (PA)), one or more antennas, etc.

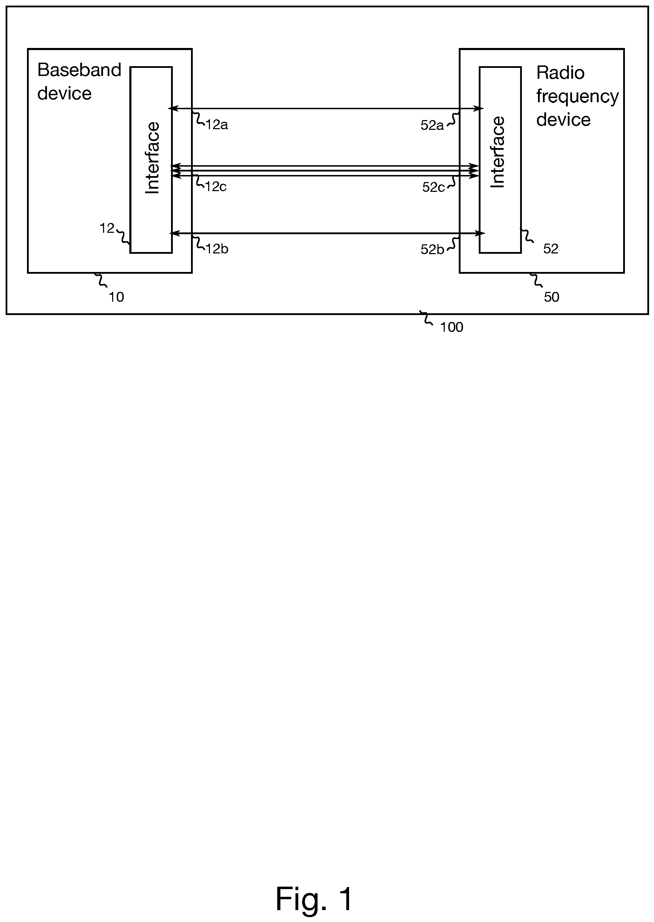

Fig. 1 illustrates examples of a baseband processing device or apparatus 10 (left hand side), a radio frequency device or apparatus 50 (right hand side), and a modem 100 comprising the baseband processing device or apparatus 10 and the radio frequency device or apparatus 50.

The baseband processing device 10 is configured for the mobile communication modem 100. The modem (modulator-demodulator) is configured to generate radio frequency signals for a mobile communication system. The mobile communication system may correspond, for example, to one of the Third Generation Partnership Project (3GPP)-standardized mobile communication networks, where the term mobile communication system is used synonymously to mobile communication network. The mobile or wireless communication system may correspond to a mobile communication system of the 5th Generation (5G) and may use mm-Wave technology. The mobile communication system may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station or base station transceiver may comprise a modem 100 and can be operable to communicate with one or more active mobile transceivers, which may also comprise such a modem 100. A base station transceiver can be located in or adjacent to a coverage area of another base station transceiver, e.g. a macro cell base station transceiver or small cell base station transceiver. Hence, examples may provide a mobile communication system comprising one or more mobile transceivers and one or more base station transceivers, wherein the base station transceivers may establish macro cells or small cells, as e.g. pico-, metro-, or femto cells. A mobile transceiver or terminal may correspond to a smartphone, a cell phone, User Equipment (UE), a laptop, a notebook, a personal computer, a Personal Digital Assistant (PDA), a Universal Serial Bus (USB) -stick, a car, etc. A mobile transceiver may also be referred to as UE or mobile in line with the 3GPP terminology.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point etc., which may be further subdivided in a remote unit and a central unit.

In the example illustrated in Fig. 1 the baseband processing device 10 is configured to process a baseband representation of a radio frequency signal. The baseband processing device 10 comprises an interface 12, which is configured to exchange payload data and control data with a radio frequency device 50. The interface 12 comprises a plurality of parallel communication links to the radio frequency device 50. A clock link 12a is configured to communicate a clock signal common to the baseband processing device 50 and the radio frequency device 50. A control link 12b is configured to communicate control data, and one or more payload links 12c are configured to communicate payload data between the baseband processing device 10 and the radio frequency device 50.

The interface 12 may correspond to one or more inputs and/or outputs for receiving and/or transmitting information or signals, any means for exchanging data, which may be in digital (bit) values or signals according to a specified code or analogue signals. The interface 12 may hence follow any protocol or specification and may correspond to any wireline input or output of the baseband device 10. The interface 12 may correspond to any means for interfacing, one or more interface modules, one or more interface units, one or more interface devices, any means for obtaining, providing or exchanging data, an obtainer or provider, one or more provision units, one or more provision modules, one or more provision devices, one or more obtaining modules, one or more obtaining units, one or more obtaining devices, etc.

Fig. 1 also illustrates an example of a radio frequency device 50 for a mobile communication modem 100. The radio frequency processing device 50 is configured to process radio frequency signals of a mobile communication system. The radio frequency device 50 comprises an interface 52 configured to exchange payload data and control data with a baseband processing device 10. The interface 52 can be implemented in line with the above interface 12 at the baseband processing device 10. The interface 52 comprises a plurality of parallel communication links to the baseband processing device 10. A clock link 52a is configured to communicate a clock signal common to the baseband processing device 10 and the radio frequency device 50. A control link 52b is configured to communicate control data, and one or more payload links 52c are configured to communicate payload data between the baseband processing device 10 and the radio frequency device 50.

A connection between the baseband processing device 10 and the RF device 50 may hence comprise at least one clock link or lane 12a, 52a, at least one control link or lane 12b, 52b, and at least one payload link or lane 12c, 52c. Multiple payload links or lanes 12c, 52c in one connection may be coupled with one or more control links 12b, 52b and one or more clock links 12a, 52a. The terms "link(s)" and "lane(s)" are used synonymously herein. One clock link 12a, 52a may provide a clock signal as reference for multiple payload links 12c, 52c, and multiple control links 12b, 52b, respectively. One control link 12b, 52b may use a clock signal as reference for multiple payload links 12c, 52c.

As shown in Fig. 1 the interfaces 12 and 52 may be coupled to each other via the plurality of parallel communication links. For example, the baseband device 10 and the RF device 50 may be implemented together in the modem 100. The plurality of parallel communication links may be implemented as parallel wires, conductors, conducting paths, strip lines, etc. In some examples the baseband device 10, the RF device 50 and the plurality of parallel communication links can be implemented on the same Printed Circuit Board (PCB).

Fig. 1 also illustrates an example of a baseband processing apparatus 10 for a mobile communication modem 100. The baseband processing apparatus 10 is configured to process a baseband representation of a radio frequency signal. The baseband processing apparatus 10 comprises means for exchanging 12 payload data and control data with a radio frequency apparatus 50. The means for exchanging 12 is configured to generate a plurality of parallel communication links to the radio frequency apparatus 50. A clock link 12a is configured to communicate a clock signal common to the baseband processing apparatus 10 and the radio frequency apparatus 50. A control link 12b is configured to communicate control data. One or more payload links 12c are configured to communicate payload data between the baseband processing apparatus 10 and the radio frequency apparatus 50.

Fig. 1 also illustrates an example of a radio frequency processing apparatus 50 for a mobile communication modem 100. The radio frequency processing apparatus 50 is configured to process radio frequency signals of a mobile communication system. The radio frequency apparatus 50 comprises means for exchanging 52 payload data and control data with a baseband processing apparatus 10. The means for exchanging 52 is configured to generate a plurality of parallel communication links to the baseband processing apparatus 10. A clock link 52a is configured to communicate a clock signal common to the baseband processing apparatus 10 and the radio frequency apparatus 50. A control link 52b is configured to communicate control data. One or more payload links 52c are configured to communicate payload data between the baseband processing apparatus 10 and the radio frequency apparatus 50.

In the following further examples will be described. The described features or functionalities of the interfaces 12, 52 apply correspondingly to the respective means for exchanging 12, 52. Repetitive description is avoided. Moreover, some symmetric features or functionality are described which can be applied in the same manner on both sides of the communication, i.e. at the baseband device or apparatus 10 and at the RF device or apparatus 50.

In further examples the one or more payload links 12c, 52c may comprise a payload uplink, which is configured to transmit payload data from the baseband processing device 10 to the radio frequency device 50. The one or more payload links 12c, 52c may also comprise a payload downlink, which is configured to receive payload data from the radio frequency device 50 at the baseband processing device 10. Note that these relations are considered from a UE perspective. Examples also provide a base station comprising a baseband processing device 10 and a radio frequency device 50. From the base station perspective transmission the one or more payload links 12c, 52c may comprise a payload downlink, which is configured to transmit payload data from the baseband processing device 10 and to the radio frequency device 50. The one or more payload links 12c, 52c may also comprise a payload uplink, which is configured to receive payload data from the radio frequency device 50 at the baseband processing device 10. At least in some examples the payload data is sampled radio frequency data.

Some examples may constrain the exchanged payload data to pure RF data so a considerably worse BER is allowed on the payload links 12c, 52c of the interface 12, 52. For example, an equivalent noise floor which could be 10-20dB below the actual impairments on the analog parts of the RF subsystem and on the air interface may be tolerable. A degradation in link performance (e.g. BER≈10⁻⁵ as an example of an order of magnitude) could be fully exploited for power saving. As a reference example, in some modems a digital RF interface with a BER in the order of magnitude of 10⁻¹⁴ may be used.

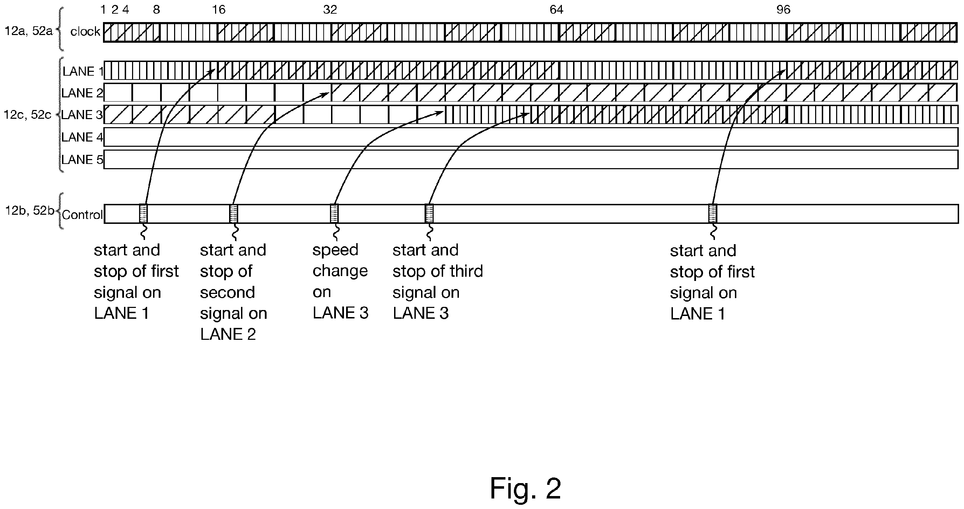

Fig. 2 shows a timing diagram of a communication in an example. Fig. 2 depicts signals on a clock link 12a, 52a at the top, signals on five parallel payload links 12c, 52c (LANE 1 - LANE 5) in the middle, and signals on a control link 12b, 52b at the bottom. The signal on the clock link 12a, 52a determines the clock for both sides. In the example depicted in Fig. 2 it is assumed that transmissions can be up- and/or downlink. The control link 12b, 52b can be used by both sides (the baseband processing device 10 and the radio frequency device 50) to announce transmissions). At least in some examples a payload link 12c, 52c or lane can be assigned to one transmission direction, i.e. to uplink or downlink.

In Fig. 2 the clock cycles are numbered from left to right 1, 2, 4, 8, 16, 32, 64, 96 etc. For a better overview the clock cycles are hachured in groups of eight cycles. On the payload links or lanes 12c, 52c and the control link 12b, 52b transmissions are hachured. In the example depicted in Fig. 2 start of transmission on LANE 1 is announced on the control link, e.g. in clock cycle 6. The announcement refers to the start of a transmission of a first signal in clock cycle 16. As indicated in Fig. 2 announcements for transmissions may indicate start and stop using the same control message or signal. In other examples separate messages or signals may be used to indicate start and stop of transmissions. For example, the transmission on LANE 1 starting during cycle 16 is a downlink transmission at a first higher data rate. On LANE 2 an uplink transmission is announced in clock cycle 19 and starts in cycle 32. As indicated by the cycle boundaries the transmission on LANE 2 uses a lower data rate, for example, a quarter of the clock rate is used. On LANE 3 the example of Fig. 2 indicates that a transmission is ongoing until cycle 24. At cycle 34 a speed change (change of payload transmission rate) on LANE 3 is announced on the control link 12b, 52b starting at cycle 48, which is indicated by the denser cycle boundaries. A transmission on LANE 3 (which could be uplink or downlink) is announced at cycle 46 on the control link 12b, 52b and starts at cycle 60, it ends at cycle 96. Another transmission on LANE 1 is announced on the control link 12b, 52b in cycle 86 and starts in cycle 97.

The main principle of the interface 12, 52 of at least some examples can be described in 3 parts. First, a common clock (time) base on both sides (baseband device 10 and RF device 50) of the interfaces 12, 52 is used, which allows assigning time stamps to dedicated events. This clock may be used case dependent. It might not be set to an unnecessarily high frequency all the time but can be scaled for certain use cases. For example, it may run at a significantly lower speed for second generation (2G) mobile communication system use case compared to an LTE carrier aggregation use case. Second, there may be pure data lanes 12c, 52c, where digital information is inserted onto a pre-defined grid (given by the clock as described above). Depending on individual speeds of lanes the effective data rate may be individual, which is further illustrated in Fig. 2, e.g. LANE 1 vs. LANE 2. Important to note is that these lanes may carry sampled RF data without any protocol or header. The interface 12, 52 may be configured to transfer payload data on the one or more payload links 12c, 52c without header information. Third, a control link 12b, 52b that carries the information which data is inserted onto which lane at what timestamp, how long the individual streams last, etc. is implemented. The interface 12, 52 may be configured to transfer link management information for the plurality of parallel communication links on the control link 12b, 52b. The interfaces 12, 52 may be configured to insert payload data packets on the one or more payload links 12c, 52c based on one or more timestamps. The interface 12, 52 may be configured to transfer time stamp information on the control link 12b.

Some examples use the assumption to re-use or share an already existing control link that already carries the protocol stack or RF driver based control plane. The clock line 12a, 52a may be implemented once to enable the common base between the two sides of the interface 12, 52. Speed changes on this clock lane may be triggered by a state of the modem on a high abstract level, e.g. according to whether it is in a paging mode, 2G call, 3G call or LTE Carrier Aggregation (CA). The short-term dynamic load assignments across the lanes might not require or trigger a speed change of the clock. The data lines 12c, 52c may be unidirectional so there may be a set of lanes into one direction and a set of further lanes into the opposite direction. The control interface or link 12b, 52b may be bi-directional. In some examples two control links, one for each direction, are conceivable.

Examples may enable a power saving by degrading the BER on the payload links 12c, 52c of the interface 12, 52. By separately grouping payload data and control plane data and using separate links for their transmission, the links and the BER on the links can be adapted to the common BER of the data on the respective link. The power consumption on a physical interface 12, 52 may mainly be given by static biasing current for Low Dropout Regulators (LDOs, power supply ripple rejection ratio (PSRR)), etc. The power consumption may also be influenced by internal driver stages having to dynamically re-/charge the gates of the output stages. Another influencing factor may be the output stages having to dynamically re-/charge the parasitic capacitance of the (mostly differential) lines. For example, parallel lines/lanes are implemented on a PCB and have a certain length or extent. Capacities are introduced between the parallel lines/lanes. Further capacities exist between the lines/lanes and a reference potential, e.g. ground, which may combine serially. These capacities or capacitances, which may depend on implementation specifics, are re-/charged during state changes of the signals on the lines/lanes. The last part may be proportional to the voltage swing, which may directly impact an eye opening and thus the link quality.

In general, smaller common mode and differential voltages allow operating the interface 12, 52 from a lower DC/DC rail, which may save effective battery current through the conversion ratio of the DC/DC converter. In some examples the baseband device 10 and/or the RF device 50 may be configured to adapt a power used for communicating on the one or more payload links 12c, 52c based on a payload data transmission rate used on the one or more payload links 12c, 52c. The baseband device 10 and/or the RF device 50 may be configured to adapt a power used for communicating on the one or more payload links 12c, 52c based on an allowable error ratio on the one or more payload links 12c, 52c. The allowable error ratio may be determined by a respective Signal-to-Noise-Ratio (SNR). The baseband device 10 and/or the RF device 50 may be configured to adapt a power used for communicating on the one or more payload links 12c, 52c based on an allowable SNR on the one or more payload links 12c, 52c. The baseband device 10 and/or the RF device 50 may be configured to adapt a power used for communicating on the one or more payload links 12c, 52c based on any quality criterion determining a transmission quality on the one or more payload links 12c, 52c.

Some examples may be configured to adapt an error rate on the one or more payload links 12c, 52c based on an error ratio for radio frequency transmission of the payload data. In some examples, a quality criterion such as BER or Block Error Rate (BLER), e.g. of the most error-prone processing or transmission step, may determine the overall quality. Examples may hence adapt a transmission quality on the payload links 12c, 52c to subsequent/preceding requirements. For example, the transmission quality may be adapted to a BER requirement on the air interface. Additionally or alternatively, the baseband device 10 and/or the RF device 50 may be configured to adapt an error rate on the one or more payload links 12c, 52c based on a payload data transmission rate used on the one or more payload links 12c.

Some examples may further improve power consumption by parallel utilization of existing resources. Additionally or alternatively, the baseband device 10 and/or the RF device 50 may be configured to adapt a number of parallel payload links 12c, 52c based on a power consumption of the baseband processing device 10 and based on a transferred payload data rate. For example, it may be fair to assume that in most of the cases not all existing lanes will be running at maximum speed, which the hardware has to be designed for (such as LTE 5-CA or 2-CA 4x4 Multiple-Input-Multiple-Output (MIMO), etc.). So in reduced throughput use cases there may be various possibilities to distribute the data across the existing lanes. The baseband device 10 and/or the RF device 50 may be configured to adapt a clock rate on the clock link 12a based on a payload data transmission rate used on the one or more payload links 12c. For example, total power consumption may be made up from a base load (to operate the interface, data channeling, etc.) and a dynamic contributor from driving the physical PCB lines.

The analysis below focuses on the (accumulated) dynamic current. The saving potential of example may be in the analog nature of the transmission lines: apart from the swing the eye-opening may be affected by the step response of the rising/falling slope (reflections on the PCB line), so the quality at the point of sampling may be a mixture of vertical scaling and how quickly the step response settles. Having a longer eye-period may relax the settling effect and a lower swing can be afforded at the same link quality.

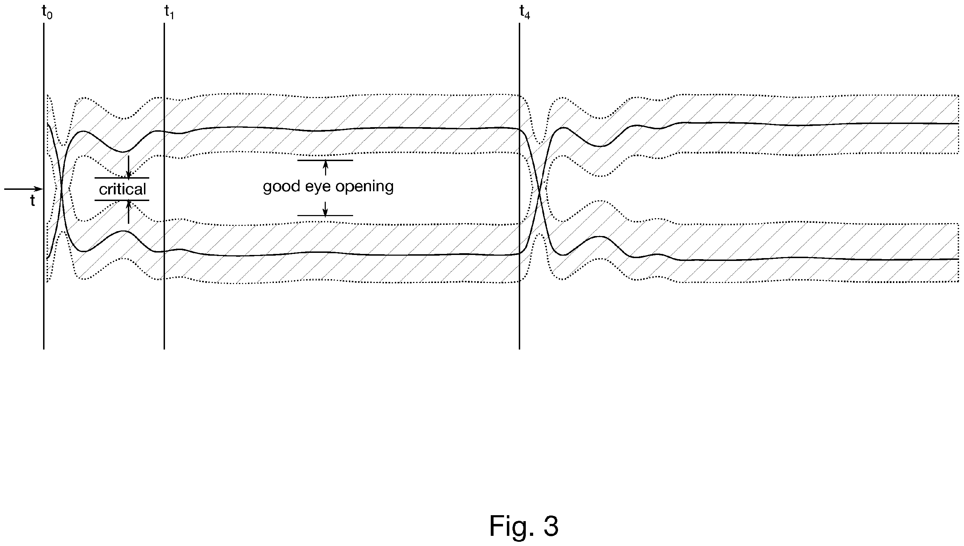

Fig. 3 depicts an eye-diagram or eye-pattern in an example. Fig. 3 shows a time axis running from left to right. The signal depicted along the time axis corresponds to a differential signal as transmitted on a payload link 12c, 52c in an example. The hachured sections enveloping the differential signal indicate noise variations. In the view graph depicted it is assumed that the signal changes between two levels at to and in case of a first lower data rate at t₄, at a second higher data rate state changes would occur earlier, for example at t₁ - if the second data rate would be four times the first data rate. In other words, Fig. 3 illustrates exemplary speeds (1x at t₄ and 4x at t₁) on the same physical line. Since transmitting the very same data comes with the same numbers of 1/0 recharging operations, the dynamic power consumption may be lower if the data is spread onto parallel (slower) lanes with a lower voltage swing. In some examples the baseband device 10 and/or the RF device 50 may be configured to adapt a voltage swing on the one or more payload links 12c, 52c based on a data rate on the one or more payload links 12c, 52c. Additionally or alternatively, the baseband device 10 and/or the RF device 50 may be configured to adapt a voltage swing on the one or more payload links 12c, 52c based on an allowable error ratio on the one or more payload links 12c, 52c. Power savings may be achieved by lowering the voltage swing, as for payload data the error ratio may be relaxed compared to mixed header and payload transmission on one link. Utilization of parallel payload data links 12c, 52c at lower data rates may allow using a lower voltage swing on the parallel payload links 12c, 52. A number of used low rate payload links in order to achieve a particular data rate may be higher than a number of respective high rate data links achieving the same data rate. However, an overall power consumption may be lower for the higher number of low rate payload data links 12c, 52c due to lower voltage swing. Such a relation may depend on the implementation of the respective baseband and RF devices 10, 50, e.g. their driver stages, clock generator, PCB implementation, etc.

So for medium data rates there may be a tradeoff between running fewer lanes at a higher speed or more lanes at a lower speed in some examples. To some extent digital pre-/post-processing may compensate savings when splitting/recombining the data on either side. Implementation details may hence determine an overall power efficiency. Moreover, in some examples the benefits of using a high number of parallel low rate lanes rather than a lower number of high rate lanes may also depend on the PCB placement and length of lines/lanes. For short distances (with a lower parasitic capacitance, shorter reflections) the effect may be negligible.

Some examples using parallel utilization of existing lanes and resources may further benefit from power saving due to relaxed electrical requirements. This benefit may as well apply to protocol/header-based interfaces, lines or lanes, which could also benefit from parallelization.

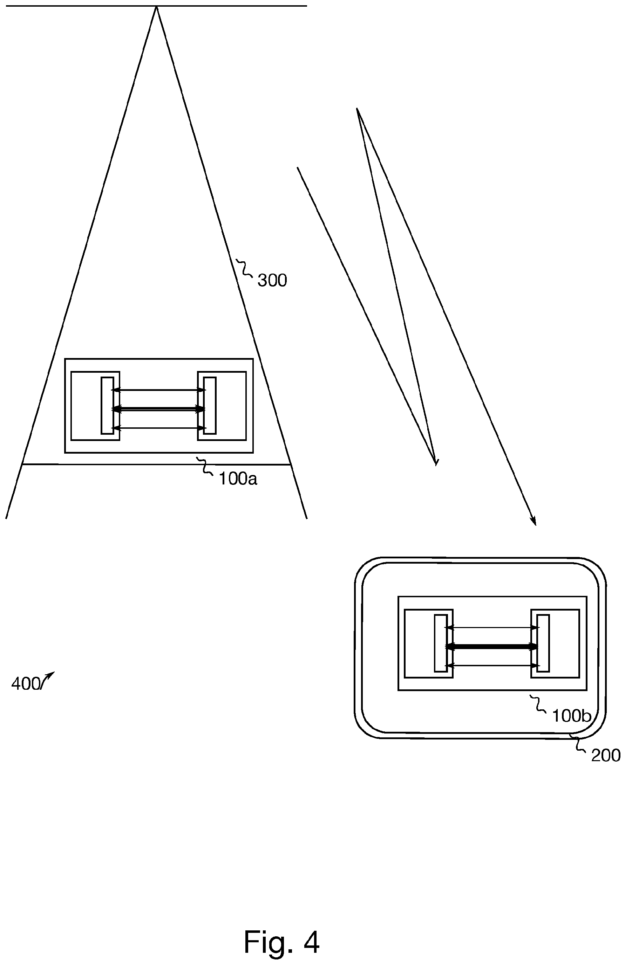

As already indicated in Fig. 1, examples also provide a modem 100 for a mobile communication system comprising an example of the baseband processing device 10 and an example of the radio frequency device 50. Examples also provide a radio transceiver comprising an example of a modem 100. Fig. 4 shows a block diagram of a mobile communication system 400, which may correspond to any mobile communication system, for example, anyone as listed above. The mobile communication system 400 comprises at least a base station transceiver 300 and a mobile terminal 200. The base station transceiver 300 comprises an example 100a of the modem 100. The mobile terminal or transceiver 200 also comprises an example 100b of the modem 100. Examples provide a base station transceiver 300 comprising an example of the modem 100. Examples may also provide a mobile transceiver comprising an example of the modem 100.

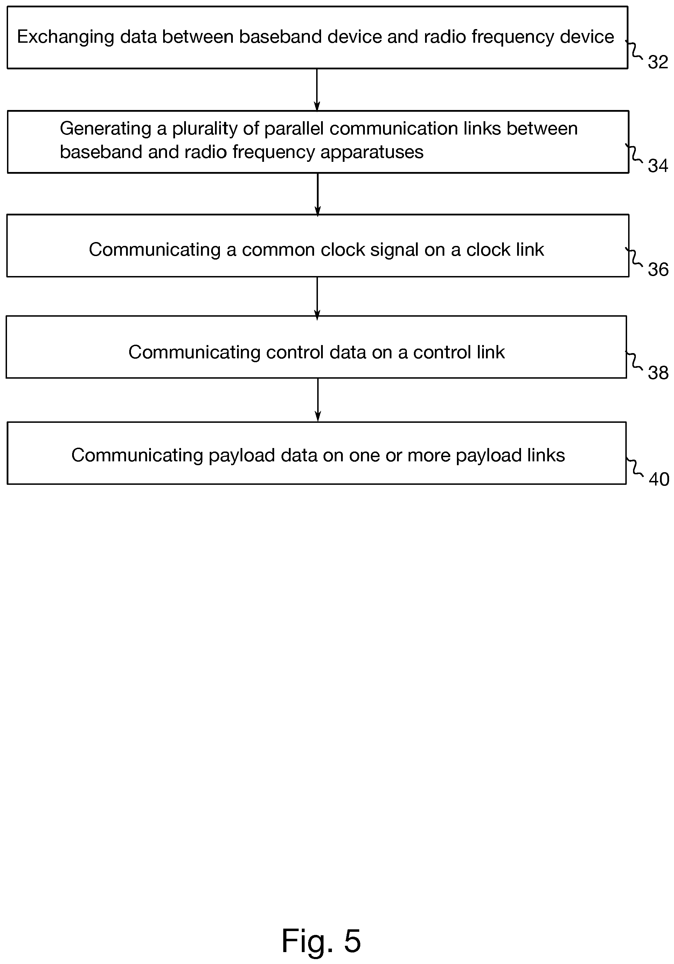

Fig. 5 shows a block diagram of a method for exchanging data between a baseband apparatus 10 and a radio frequency apparatus 50 of a mobile communication modem 100. The baseband processing apparatus 10 is configured to process a baseband representation of a radio frequency signal. The method comprises exchanging 32 payload data and control data between the baseband processing apparatus 10 and the radio frequency apparatus 50. The method comprises generating 34 a plurality of parallel communication links between the baseband processing apparatus 10 and the radio frequency apparatus 50. The method further comprises communicating 36 a clock signal common to the baseband processing apparatus 10 and the radio frequency apparatus 50 on a clock link 12a, 52a. The method further comprises communicating 38 control data on a control link 12b, 52b and communicating 40 payload data on one or more payload links 52c, 12c.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The examples as described herein may be summarized as follows:
A first example is a baseband processing device 10 for a mobile communication modem 100, the baseband processing device 10 being configured to process a baseband representation of a radio frequency signal, the baseband processing device 10 comprising an interface 12 configured to exchange payload data and control data with a radio frequency device 50. The interface 12 comprises a plurality of parallel communication links to the radio frequency device 50. A clock link 12a is configured to communicate a clock signal common to the baseband processing device 10 and the radio frequency device 50. A control link 12b is configured to communicate control data. One or more payload links 12c are configured to communicate payload data between the baseband processing device 10 and the radio frequency device 50.
Example 2 is the baseband processing device 10 of example 1, wherein the one or more payload links 12c comprise a payload uplink, which is configured to transmit payload data from the baseband processing device 10 and to the radio frequency device 50, and wherein the one or more payload links 12c comprise a payload downlink, which is configured to receive payload data from the radio frequency device 50 at the baseband processing device 10.
Example 3 is the baseband processing device 10 of one of the examples 1 or 2, wherein the interface 12 is configured to transfer link management information for the plurality of parallel communication links on the control link 12b.
Example 4 is the baseband processing device 10 of one of the examples 1 to 3, wherein the interface 12 is configured to transfer payload data on the one or more payload links 12c without header information.
Example 5 is the baseband processing device 10 of one of the examples 1 to 4, further configured to adapt a power used for communicating on the one or more payload links 12c based on a payload data transmission rate used on the one or more payload links 12c.
Example 6 is the baseband processing device 10 of one of the examples 1 to 5, further configured to adapt a power used for communicating on the one or more payload links 12c based on an allowable error ratio on the one or more payload links 12c.
Example 7 is the baseband processing device 10 of one of the examples 1 to 6, further configured to adapt an error rate on the one or more payload links 12c based on an error ratio for radio frequency transmission of the payload data.
Example 8 is the baseband processing device 10 of one of the examples 1 to 7, further configured to adapt an error rate on the one or more payload links 12c based on a payload data transmission rate used on the one or more payload links 12c.
Example 9 is the baseband processing device 10 of one of the examples 1 to 8, further configured to adapt a clock rate on the clock link 12a based on a payload data transmission rate used on the one or more payload links 12c.
Example 10 is the baseband processing device 10 of one of the examples 1 to 9, wherein the payload data is sampled radio frequency data.
Example 11 is the baseband processing device 10 of one of the examples 1 to 10, wherein the interface 12 is configured to insert payload data packets on the one or more payload links 12c based on one or more timestamps, wherein the interface 12 is configured to transfer time stamp information on the control link 12b.
Example 12 is the baseband processing device 10 of one of the examples 1 to 11, wherein the control link 12b is bi-directional.
Example 13 is the baseband processing device 10 of one of the examples 1 to 12, further being configured to adapt a voltage swing on the one or more payload links 12c based on a data rate on the one or more payload links 12c.
Example 14 is the baseband processing device 10 of one of the examples 1 to 13, further being configured to adapt a voltage swing on the one or more payload links 12c based on an allowable error ratio on the one or more payload links 12c.
Example 15 is the baseband processing device 10 of one of the examples 1 to 14, further being configured to adapt a number of parallel payload links 12c based on a power consumption of the baseband processing device 10 and based on a transferred payload data rate.
Example 16 is a radio frequency processing device 50 for a mobile communication modem 100. The radio frequency processing device 50 is configured to process radio frequency signals of a mobile communication system, the radio frequency device 50 comprising an interface 52 configured to exchange payload data and control data with a baseband processing device 10. The interface 52 comprises a plurality of parallel communication links to the baseband processing device 10. A clock link 52a is configured to communicate a clock signal common to the baseband processing device 10 and the radio frequency device 50. A control link 52b is configured to communicate control data. One or more payload links 52c are configured to communicate payload data between the baseband processing device 10 and the radio frequency device 50.
Example 17 is the radio frequency device 50 of example 16, wherein the one or more payload links 52c comprise a payload uplink, which is configured to transmit payload data from the baseband processing device and to the radio frequency device 50, and wherein the one or more payload links 52c comprise a payload downlink link, which is configured to receive payload data from the radio frequency device 50 at the baseband processing device 10.
Example 18 is the radio frequency device 50 of one of the examples 16 or 17, wherein the interface 52 is configured to transfer link management information for the plurality of parallel communication links on the control link 52b.
Example 19 is the radio frequency device 50 of one of the examples 16 to 18, wherein the interface 52 is configured to transfer payload data on the one or more payload links 52c without header information.
Example 20 is the radio frequency device 50 of one of the examples 16 to 19, further configured to adapt a power used for communicating on the one or more payload links 52c based on a payload data transmission rate used on the one or more payload links 52c.
Example 21 is the radio frequency device 50 of one of the examples 16 to 20 further configured to adapt a power used for communicating on the one or more payload links 52c based on an allowable error ratio on the one or more payload links 52c.
Example 22 is the radio frequency device 50 of one of the examples 16 to 21 further configured to adapt an error rate on the one or more payload links 52c based on an error ratio for radio frequency transmission of the payload data.
Example 23 is the radio frequency device 50 of one of the examples 16 to 22 further configured to adapt an error rate on the one or more payload links 52c based on a payload data transmission rate used on the one or more payload links 52c.
Example 24 is the radio frequency device 50 of one of the examples 16 to 23 further configured to adapt a clock rate on the clock link 52a based on a payload data transmission rate used on the one or more payload links 52c.
Example 25 is the radio frequency device 50 of one of the examples 16 to 24, wherein the payload data is sampled radio frequency data.
Example 26 is the radio frequency device 50 of one of the examples 16 to 25, wherein the interface 52 is configured to insert payload data packets on the one or more payload links 52c based on one or more timestamps, wherein the interface 52 is configured to transfer time stamp information on the control link 52b.
Example 27 is the radio frequency device 50 of one of the examples 16 to 26, wherein the control link 52b is bi-directional.
Example 28 is the radio frequency device 50 of one of the examples 16 to 27, further being configured to adapt a voltage swing on the one or more payload links 52c based on a data rate on the one or more payload links 52c.
Example 29 is the radio frequency device 50 of one of the examples 16 to 28, further being configured to adapt a voltage swing on the one or more payload links 52c based on an allowable error ratio on the one or more payload links 52c.
Example 30 is the radio frequency device 50 of one of the examples 16 to 29, further being configured to adapt a number of parallel payload links 52c based on a power consumption of the radio frequency device 50 and based on a transferred payload data rate.
Example 31 is a baseband processing apparatus 10 for a mobile communication modem 100. The baseband processing apparatus 10 is configured to process a baseband representation of a radio frequency signal. The baseband processing apparatus 10 comprises means for exchanging 12 payload data and control data with a radio frequency apparatus 50. The means for exchanging 12 is configured to generate a plurality of parallel communication links to the radio frequency apparatus 50. A clock link 12a is configured to communicate a clock signal common to the baseband processing apparatus 10 and the radio frequency apparatus 50. A control link 12b is configured to communicate control data. One or more payload links 12c are configured to communicate payload data between the baseband processing apparatus 10 and the radio frequency apparatus 50.
Example 32 is the baseband processing apparatus 10 of example 31, wherein the one or more payload links 12c comprise a payload uplink, which is configured to transmit payload data from the baseband processing apparatus 10 and to the radio frequency apparatus 50, and wherein the one or more payload links 12c comprise a payload downlink, which is configured to receive payload data from the radio frequency apparatus 50 at the baseband processing apparatus 10.
Example 33 is the baseband processing apparatus 10 of one of the examples 31 or 32, wherein the means for exchanging 12 is configured to transfer link management information for the plurality of parallel communication links on the control link 12b.
Example 34 is the baseband processing apparatus 10 of one of the examples 31 to 33, wherein the means for exchanging 12 is configured to transfer payload data on the one or more payload links 12c without header information.
Example 35 is the baseband processing apparatus 10 of one of the examples 31 to 34, further configured to adapt a power used for communicating on the one or more payload links 12c based on a payload data transmission rate used on the one or more payload links 12c.
Example 36 is the baseband processing apparatus 10 of one of the examples 31 to 35, further configured to adapt a power used for communicating on the one or more payload links 12c based on an allowable error ratio on the one or more payload links 12c.
Example 37 is the baseband processing apparatus 10 of one of the examples 31 to 36, further configured to adapt an error rate on the one or more payload links 12c based on an error ratio for radio frequency transmission of the payload data.
Example 38 is the baseband processing apparatus 10 of one of the examples 31 to 37, further configured to adapt an error rate on the one or more payload links 12c based on a payload data transmission rate used on the one or more payload links 12c.
Example 39 is the baseband processing apparatus 10 of one of the examples 31 to 38, further configured to adapt a clock rate on the clock link 12a based on a payload data transmission rate used on the one or more payload links 12c.
Example 40 is the baseband processing apparatus 10 of one of the examples 31 to 39, wherein the payload data is sampled radio frequency data.
Example 41 is the baseband processing apparatus 10 of one of the examples 31 to 40, wherein means for exchanging 12 is configured to insert payload data packets on the one or more payload links 12c based on one or more timestamps, wherein means for exchanging 12 is configured to transfer time stamp information on the control link 12b.
Example 42 is the baseband processing apparatus 10 of one of the examples 31 to 41, wherein the control link 12b is bi-directional.
Example 43 is the baseband processing apparatus 10 of one of the examples 31 to 42, further being configured to adapt a voltage swing on the one or more payload links 12c based on a data rate on the one or more payload links 12c.
Example 44 is the baseband processing apparatus 10 of one of the examples 31 to 43, further being configured to adapt a voltage swing on the one or more payload links 12c based on an allowable error ratio on the one or more payload links 12c.
Example 45 is the baseband processing apparatus 10 of one of the examples 31 to 44, further being configured to adapt a number of parallel payload links 12c based on a power consumption of the baseband processing apparatus 10 and based on a transferred payload data rate.
Example 46 is a radio frequency processing apparatus 50 for a mobile communication modem 100. The radio frequency processing apparatus 50 is configured to process radio frequency signals of a mobile communication system. The radio frequency apparatus 50 comprises means for exchanging 52 payload data and control data with a baseband processing apparatus 10. The means for exchanging 52 is configured to generate a plurality of parallel communication links to the baseband processing apparatus 10. A clock link 52a is configured to communicate a clock signal common to the baseband processing apparatus 10 and the radio frequency apparatus 50. A control link 52b is configured to communicate control data. One or more payload links 52c are configured to communicate payload data between the baseband processing apparatus 10 and the radio frequency apparatus 50.
Example 47 is the radio frequency apparatus 50 of example 46, wherein the one or more payload links 52c comprise a payload uplink, which is configured to transmit payload data from the baseband processing apparatus and to the radio frequency apparatus 50, and wherein the one or more payload links 52c comprise a payload downlink link, which is configured to receive payload data from the radio frequency apparatus 50 at the baseband processing apparatus 10.
Example 48 is the radio frequency apparatus 50 of one of the examples 46 or 47, wherein means for exchanging 52 is configured to transfer link management information for the plurality of parallel communication links on the control link 52b.
Example 49 is the radio frequency apparatus 50 of one of the examples 46 to 48, wherein the means for exchanging 52 is configured to transfer payload data on the one or more payload links 52c without header information.
Example 50 is the radio frequency apparatus 50 of one of the examples 46 to 49, further configured to adapt a power used for communicating on the one or more payload links 52c based on a payload data transmission rate used on the one or more payload links 52c.
Example 51 is the radio frequency apparatus 50 of one of the examples 46 to 50 further configured to adapt a power used for communicating on the one or more payload links 52c based on an allowable error ratio on the one or more payload links 52c.
Example 52 is the radio frequency apparatus 50 of one of the examples 46 to 51 further configured to adapt an error rate on the one or more payload links 52c based on an error ratio for radio frequency transmission of the payload data.
Example 53 is the radio frequency apparatus 50 of one of the examples 46 to 52 further configured to adapt an error rate on the one or more payload links 52c based on a payload data transmission rate used on the one or more payload links 52c.
Example 54 is the radio frequency apparatus 50 of one of the examples 46 to 53 further configured to adapt a clock rate on the clock link 52a based on a payload data transmission rate used on the one or more payload links 52c.
Example 55 is the radio frequency apparatus 50 of one of the examples 46 to 54, wherein the payload data is sampled radio frequency data.
Example 56 is the radio frequency apparatus 50 of one of the examples 46 to 55, wherein the means for exchanging 52 is configured to insert payload data packets on the one or more payload links 52c based on one or more timestamps, wherein means for exchanging 52 is configured to transfer time stamp information on the control link 52b.
Example 57 is the radio frequency apparatus 50 of one of the examples 46 to 56, wherein the control link 52b is bi-directional.
Example 58 is the radio frequency apparatus 50 of one of the examples 46 to 57, further being configured to adapt a voltage swing on the one or more payload links 52c based on a data rate on the one or more payload links 52c.
Example 59 is the radio frequency apparatus 50 of one of the examples 46 to 58, further being configured to adapt a voltage swing on the one or more payload links 52c based on an allowable error ratio on the one or more payload links 52c.
Example 60 is the radio frequency apparatus 50 of one of the examples 46 to 59, further being configured to adapt a number of parallel payload links 52c based on a power consumption of the radio frequency apparatus 50 and based on a transferred payload data rate.
Example 61 is a method for exchanging data between a baseband apparatus 10 and a radio frequency apparatus 50 of a mobile communication modem 100. The baseband processing apparatus 10 is configured to process a baseband representation of a radio frequency signal. The method comprises exchanging 32 payload data and control data between the baseband processing apparatus 10 and the radio frequency apparatus 50. The method comprises generating 34 a plurality of parallel communication links between the baseband processing apparatus 10 and the radio frequency apparatus 50. The method comprises communicating 36 a clock signal common to the baseband processing apparatus 10 and the radio frequency apparatus 50 on a clock link 12a; 52a. The method comprises communicating 38 control data on a control link 12b; 52b. The method comprises communicating 40 payload data on one or more payload links 12c; 52c.
Example 62 is the method of example 61, wherein the one or more payload links 12c comprise a payload uplink, which is configured to transmit payload data from the baseband processing apparatus 10 and to the radio frequency apparatus 50, and wherein the one or more payload links 12c comprise a payload downlink, which is configured to receive payload data from the radio frequency apparatus 50 at the baseband processing apparatus 10.
Example 63 is the method of one of the examples 61 or 62, comprising transferring link management information for the plurality of parallel communication links on the control link 12b.
Example 64 is the method of one of the examples 61 to 63, comprising transferring payload data on the one or more payload links 12c without header information.
Example 65 is the method of one of the examples 61 to 64, comprising adapting a power used for communicating on the one or more payload links 12c based on a payload data transmission rate used on the one or more payload links 12c.
Example 66 is the method of one of the examples 61 to 65, comprising adapting a power used for communicating on the one or more payload links 12c based on an allowable error ratio on the one or more payload links 12c.
Example 67 is the method of one of the examples 61 to 66, comprising adapting an error rate on the one or more payload links 12c based on an error ratio for radio frequency transmission of the payload data.
Example 68 is the method of one of the examples 61 to 67, comprising adapting an error rate on the one or more payload links 12c based on a payload data transmission rate used on the one or more payload links 12c.
Example 69 is the method of one of the examples 61 to 68, comprising adapting a clock rate on the clock link 12a based on a payload data transmission rate used on the one or more payload links 12c.
Example 70 is the method of one of the examples 61 to 69, wherein the payload data is sampled radio frequency data.
Example 71 is the method of one of the examples 61 to 70, comprising inserting payload data packets on the one or more payload links 12c based on one or more timestamps, and transferring time stamp information on the control link 12b.
Example 72 is the method of one of the examples 61 to 71, wherein the control link 12b is bi-directional.
Example 73 is the method of one of the examples 61 to 72, comprising adapting a voltage swing on the one or more payload links 12c based on a data rate on the one or more payload links 12c.
Example 74 is the method of one of the examples 61 to 73, comprising adapting a voltage swing on the one or more payload links 12c based on an allowable error ratio on the one or more payload links 12c.
Example 75 is the method of one of the examples 61 to 74, comprising adapting a number of parallel payload links 12c based on a power consumption of the baseband processing apparatus 10, the radio frequency apparatus 50 and/or based on a transferred payload data rate.
Example 76 is a modem 100 for a mobile communication system comprising the baseband processing device 10 of one of the examples 1 to 15 or the baseband processing apparatus 10 of one of the examples 31 to 45, and the radio frequency device 50 of one of the examples 16 to 30, or the radio frequency apparatus 50 of one of the examples 46 to 60.
Example 77 is a radio transceiver comprising the modem 100 of example 76.
Example 78 is a mobile terminal comprising the modem 100 of example 76.
Example 79 is a computer program having a program code for performing the method of at least one of the examples 61 to 75, when the computer program is executed on a computer, a processor, or a programmable hardware component.
Example 80 is a machine readable storage including machine readable instructions, when executed, to implement a method or realize an apparatus as exemplified in any example described herein.
Example 81 is a machine readable medium including code, when executed, to cause a machine to perform the method of any one of examples 61 to 75.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

## Claims

1. A baseband processing apparatus (10) for a mobile communication modem (100), the baseband processing apparatus (10) being configured to process a baseband representation of a radio frequency signal, the baseband processing apparatus (10) comprising means for exchanging (12) payload data and control data with a radio frequency apparatus (50), wherein the means for exchanging (12) is configured to generate a plurality of parallel communication links to the radio frequency apparatus (50),
wherein a clock link (12a) is configured to communicate a clock signal common to the baseband processing apparatus (10) and the radio frequency apparatus (50),
wherein a control link (12b) is configured to communicate control data, and wherein one or more payload links (12c) are configured to communicate payload data between the baseband processing apparatus (10) and the radio frequency apparatus (50),
wherein the baseband processing apparatus (10) is further configured to adapt a power used for communicating on the one or more payload links (12c) based on a payload data transmission rate used on the one or more payload links (12c).

2. The baseband processing apparatus (10) of claim 1, wherein the one or more payload links (12c) comprise a payload uplink, which is configured to transmit payload data from the baseband processing apparatus (10) and to the radio frequency apparatus (50), and wherein the one or more payload links (12c) comprise a payload downlink, which is configured to receive payload data from the radio frequency apparatus (50) at the baseband processing apparatus (10).

3. The baseband processing apparatus (10) of one of the claims 1 or 2, wherein the means for exchanging (12) is configured to transfer link management information for the plurality of parallel communication links on the control link (12b), and wherein the means for exchanging (12) is configured to transfer payload data on the one or more payload links (12c) without header information.

4. The baseband processing apparatus (10) of one of the claims 1 to 3, further configured to adapt a power used for communicating on the one or more payload links (12c) based on an allowable error ratio on the one or more payload links (12c).

5. The baseband processing apparatus (10) of one of the claims 1 to 4, further configured to adapt an error rate on the one or more payload links (12c) based on an error ratio for radio frequency transmission of the payload data, and further configured to adapt an error rate on the one or more payload links (12c) based on a payload data transmission rate used on the one or more payload links (12c).

6. A radio frequency apparatus (50) for a mobile communication modem (100), the radio frequency apparatus (50) being configured to process radio frequency signals of a mobile communication system, the radio frequency apparatus (50) comprising means for exchanging (52) payload data and control data with a baseband processing apparatus (10), wherein the means for exchanging (52) is configured to generate a plurality of parallel communication links to the baseband processing apparatus (10),
wherein a clock link (52a) is configured to communicate a clock signal common to the baseband processing apparatus (10) and the radio frequency apparatus (50),
wherein a control link (52b) is configured to communicate control data, and
wherein one or more payload links (52c) are configured to communicate payload data between the baseband processing apparatus (10) and the radio frequency apparatus (50),
wherein the radio frequency apparatus (59) is further configured to adapt a power used for communicating on the one or more payload links (52c) based on a payload data transmission rate used on the one or more payload links (52c).

7. The radio frequency apparatus (50) of claim 6, wherein the one or more payload links (52c) comprise a payload uplink, which is configured to transmit payload data from the baseband processing apparatus and to the radio frequency apparatus (50), and wherein the one or more payload links (52c) comprise a payload downlink link, which is configured to receive payload data from the radio frequency apparatus (50) at the baseband processing apparatus (10).

8. The radio frequency apparatus (50) of one of the claims 6 or 7, wherein means for exchanging (52) is configured to transfer link management information for the plurality of parallel communication links on the control link (52b), and wherein the means for exchanging (52) is configured to transfer payload data on the one or more payload links (52c) without header information.

9. The radio frequency apparatus (50) of one of the claims 6 to 8, further configured to adapt a power used for communicating on the one or more payload links (52c) based on an allowable error ratio on the one or more payload links (52c).

10. The radio frequency apparatus (50) of one of the claims 6 to 9 further configured to adapt an error rate on the one or more payload links (52c) based on an error ratio for radio frequency transmission of the payload data, and further configured to adapt an error rate on the one or more payload links (52c) based on a payload data transmission rate used on the one or more payload links (52c).

11. A modem (100) for a mobile communication system comprising:
• the baseband processing apparatus (10) of one of the claims 1 to 5; and
• the radio frequency apparatus (50) of one of the claims 6 to 10.

12. A radio transceiver comprising the modem (100) of claim 11.

13. A mobile terminal comprising the modem (100) of claim 11.

14. A method for exchanging data between a baseband apparatus (10) and a radio frequency apparatus (50) of a mobile communication modem (100), the baseband processing apparatus (10) being configured to process a baseband representation of a radio frequency signal, the method comprises exchanging (32) payload data and control data between the baseband processing apparatus (10) and the radio frequency apparatus (50), the method comprising
generating (34) a plurality of parallel communication links between the baseband processing apparatus (10) and the radio frequency apparatus (50),
communicating (36) a clock signal common to the baseband processing apparatus (10) and the radio frequency apparatus (50) on a clock link (12a; 52a),
communicating (38) control data on a control link (12b; 52b); and
communicating (40) payload data on one or more payload links (12c; 52c)
adapting a power used for communicating on the one or more payload links (52c) based on a payload data transmission rate used on the one or more payload links (52c).

15. A computer program having a program code for performing the method of claim 14, when the computer program is executed on a computer, a processor, or a programmable hardware component.

## Patentansprüche

1. Basisbandverarbeitungsvorrichtung (10) für ein mobiles Kommunikationsmodem (100), wobei die Basisbandverarbeitungsvorrichtung (10) dazu ausgelegt ist, eine Basisbandrepräsentation eines Funkfrequenzsignals zu verarbeiten, wobei die Basisbandverarbeitungsvorrichtung (10) ein Mittel zum Austauschen (12) von Nutzlastdaten und Steuerdaten mit einer Funkfrequenzvorrichtung (50) umfasst, wobei das Mittel zum Austauschen (12) dazu ausgelegt ist, eine Vielzahl von parallelen Kommunikationsverbindungen zur Funkfrequenzvorrichtung (50) zu erzeugen,
wobei eine Taktverbindung (12a) dazu ausgelegt ist, ein Taktsignal, das der Basisbandverarbeitungsvorrichtung (10) und der Funkfrequenzvorrichtung (50) gemeinsam ist, zu kommunizieren,
wobei eine Steuerverbindung (12b) dazu ausgelegt ist, Steuerdaten zu kommunizieren, und
wobei eine oder mehrere Nutzlastverbindungen (12c) dazu ausgelegt sind, zwischen der Basisbandverarbeitungsvorrichtung (10) und der Funkfrequenzvorrichtung (50) Nutzlastdaten zu kommunizieren,
wobei die Basisbandverarbeitungsvorrichtung (10) ferner dazu ausgelegt ist, auf Basis einer Nutzlastdatenübertragungsrate, die auf der einen oder den mehreren Nutzlastverbindungen (12c) verwendet wird, eine Leistung, die zum Kommunizieren auf der einen oder den mehreren Nutzlastverbindungen (12c) verwendet wird, anzupassen.

2. Basisbandverarbeitungsvorrichtung (10) nach Anspruch 1, wobei die eine oder die mehreren Nutzlastverbindungen (12c) einen Nutzlastuplink umfassen, der dazu ausgelegt ist, Nutzlastdaten von der Basisbandverarbeitungsvorrichtung (10) und zu der Funkfrequenzvorrichtung (50) zu übertragen, und wobei die eine oder die mehreren Nutzlastverbindungen (12c) einen Nutzlastdownlink umfassen, der dazu ausgelegt ist, an der Basisbandverarbeitungsvorrichtung (10) Nutzlastdaten von der Funkfrequenzvorrichtung (50) zu empfangen.

3. Basisbandverarbeitungsvorrichtung (10) nach einem der Ansprüche 1 oder 2, wobei das Mittel zum Austauschen (12) dazu ausgelegt ist, Verbindungsverwaltungsinformationen für die Vielzahl von parallelen Kommunikationsverbindungen auf der Steuerverbindung (12b) zu übermitteln, und wobei das Mittel zum Austauschen (12) dazu ausgelegt ist, auf der einen oder den mehreren Nutzlastverbindungen (12c) Nutzlastdaten ohne Headerinformationen zu übermitteln.

4. Basisbandverarbeitungsvorrichtung (10) nach einem der Ansprüche 1 bis 3, die ferner dazu ausgelegt ist, auf Basis eines zulässigen Fehlerverhältnisses auf der einen oder den mehreren Nutzlastverbindungen (12c) eine Leistung, die zum Kommunizieren auf der einen oder den mehreren Nutzlastverbindungen (12c) verwendet wird, anzupassen.

5. Basisbandverarbeitungsvorrichtung (10) nach einem der Ansprüche 1 bis 4, die ferner dazu ausgelegt ist, auf Basis eines Fehlerverhältnisses für eine Funkfrequenzübertragung der Nutzlastdaten eine Fehlerrate auf der einen oder den mehreren Nutzlastverbindungen (12c) anzupassen, und ferner dazu ausgelegt, auf Basis einer Nutzlastdatenübertragungsrate, die auf der einen oder den mehreren Nutzlastverbindungen (12c) verwendet wird, eine Fehlerrate auf der einen oder den mehreren Nutzlastverbindungen (12c) anzupassen.

6. Funkfrequenzvorrichtung (50) für ein mobiles Kommunikationsmodem (100), wobei die Funkfrequenzvorrichtung (50) dazu ausgelegt ist, Funkfrequenzsignale eines mobilen Kommunikationssystems zu verarbeiten, wobei die Funkfrequenzvorrichtung (50) ein Mittel zum Austauschen (52) von Nutzlastdaten und Steuerdaten mit einer Basisbandverarbeitungsvorrichtung (10) umfasst, wobei das Mittel zum Austauschen (52) dazu ausgelegt ist, eine Vielzahl von parallelen Kommunikationsverbindungen zur Basisbandverarbeitungsvorrichtung (10) zu erzeugen, wobei eine Taktverbindung (52a) dazu ausgelegt ist, ein Taktsignal, das der Basisbandverarbeitungsvorrichtung (10) und der Funkfrequenzvorrichtung (50) gemeinsam ist, zu kommunizieren,
wobei eine Steuerverbindung (52b) dazu ausgelegt ist, Steuerdaten zu kommunizieren, und
wobei eine oder mehrere Nutzlastverbindungen (52c) dazu ausgelegt sind, zwischen der Basisbandverarbeitungsvorrichtung (10) und der Funkfrequenzvorrichtung (50) Nutzlastdaten zu kommunizieren,
wobei die Funkfrequenzvorrichtung (59) ferner dazu ausgelegt ist, auf Basis einer Nutzlastdatenübertragungsrate, die auf der einen oder den mehreren Nutzlastverbindungen (52c) verwendet wird, eine Leistung, die zum Kommunizieren auf der einen oder den mehreren Nutzlastverbindungen (52c) verwendet wird, anzupassen.

7. Funkfrequenzvorrichtung (50) nach Anspruch 6, wobei die eine oder die mehreren Nutzlastverbindungen (52c) einen Nutzlastuplink umfassen, der dazu ausgelegt ist, Nutzlastdaten von der Basisbandverarbeitungsvorrichtung und zu der Funkfrequenzvorrichtung (50) zu übertragen, und wobei die eine oder die mehreren Nutzlastverbindungen (52c) eine Nutzlastdownlinkverbindung umfassen, die dazu ausgelegt ist, an der Basisbandverarbeitungsvorrichtung (10) Nutzlastdaten von der Funkfrequenzvorrichtung (50) zu empfangen.

8. Funkfrequenzvorrichtung (50) nach einem der Ansprüche 6 oder 7, wobei das Mittel zum Austauschen (52) dazu ausgelegt ist, Verbindungsverwaltungsinformationen für die Vielzahl von parallelen Kommunikationsverbindungen auf der Steuerverbindung (52b) zu übermitteln, und wobei das Mittel zum Austauschen (52) dazu ausgelegt ist, auf der einen oder den mehreren Nutzlastverbindungen (52c) Nutzlastdaten ohne Headerinformationen zu übermitteln.

9. Funkfrequenzvorrichtung (50) nach einem der Ansprüche 6 bis 8, die ferner dazu ausgelegt ist, auf Basis eines zulässigen Fehlerverhältnisses auf der einen oder den mehreren Nutzlastverbindungen (52c) eine Leistung, die zum Kommunizieren auf der einen oder den mehreren Nutzlastverbindungen (52c) verwendet wird, anzupassen.

10. Funkfrequenzvorrichtung (50) nach einem der Ansprüche 6 bis 9, die ferner dazu ausgelegt ist, auf Basis eines Fehlerverhältnisses für eine Funkfrequenzübertragung der Nutzlastdaten eine Fehlerrate auf der einen oder den mehreren Nutzlastverbindungen (52c) anzupassen, und ferner dazu ausgelegt, auf Basis einer Nutzlastdatenübertragungsrate, die auf der einen oder den mehreren Nutzlastverbindungen (52c) verwendet wird, eine Fehlerrate auf der einen oder den mehreren Nutzlastverbindungen (52c) anzupassen.

11. Modem (100) für ein mobiles Kommunikationssystem, das Folgendes umfasst:
• die Basisbandverarbeitungsvorrichtung (10) nach einem der Ansprüche 1 bis 5 und
• die Funkfrequenzvorrichtung (50) nach einem der Ansprüche 6 bis 10.

12. Funksendeempfänger, der das Modem (100) nach Anspruch 11 umfasst.

13. Mobiles Endgerät, das das Modem (100) nach Anspruch 11 umfasst.

14. Verfahren zum Austauschen von Daten zwischen einer Basisbandvorrichtung (10) und einer Funkfrequenzvorrichtung (50) eines mobilen Kommunikationsmodems (100), wobei die Basisbandverarbeitungsvorrichtung (10) dazu ausgelegt ist, eine Basisbandrepräsentation eines Funkfrequenzsignals zu verarbeiten, das Verfahren umfasst das Austauschen (32) von Nutzlastdaten und Steuerdaten zwischen der Basisbandverarbeitungsvorrichtung (10) und der Funkfrequenzvorrichtung (50), wobei das Verfahren Folgendes umfasst
Erzeugen (34) einer Vielzahl von parallelen Kommunikationsverbindungen zwischen der Basisbandverarbeitungsvorrichtung (10) und der Funkfrequenzvorrichtung (50),
Kommunizieren (36) eines Taktsignals, das der Basisbandverarbeitungsvorrichtung (10) und der Funkfrequenzvorrichtung (50) gemeinsam ist, auf einer Taktverbindung (12a; 52a),
Kommunizieren (38) von Steuerdaten auf einer Steuerverbindung (12b; 52b);
Kommunizieren (40) von Nutzlastdaten auf einer oder mehreren Nutzlastverbindungen (12c; 52c) Anpassen einer Leistung, die zum Kommunizieren auf der einen oder den mehreren Nutzlastverbindungen (52c) verwendet wird, auf Basis einer Nutzlastdatenübertragungsrate, die auf der einen oder den mehreren Nutzlastverbindungen (52c) verwendet wird.

15. Computerprogramm, das einen Programmcode zum Durchführen des Verfahrens nach Anspruch 14, wenn das Computerprogramm auf einem Computer, einem Prozessor oder einer programmierbaren Hardwarekomponente ausgeführt wird, aufweist.

## Revendications

1. Appareil de traitement de bande de base (10) pour un modem de communication mobile (100), l'appareil de traitement de bande de base (10) étant configuré pour traiter une représentation de bande de base d'un signal radiofréquence, l'appareil de traitement de bande de base (10) comprenant un moyen d'échange (12) de données de charge utile et de données de commande avec un appareil de radiofréquence (50), dans lequel le moyen d'échange (12) est configuré pour générer une pluralité de liaisons de communication parallèles pour l'appareil de radiofréquence (50),
dans lequel une liaison d'horloge (12a) est configurée pour communiquer un signal d'horloge commun à l'appareil de traitement de bande de base (10) et à l'appareil de radiofréquence (50),
dans lequel une liaison de commande (12b) est configurée pour communiquer des données de commande et
dans lequel une ou plusieurs liaisons de charge utile (12c) sont configurées pour communiquer des données de charge utile entre l'appareil de traitement de bande de base (10) et l'appareil de radiofréquence (50),
dans lequel l'appareil de traitement de bande de base (10) est en outre configuré pour adapter une puissance utilisée pour communiquer sur la ou les liaisons de charge utile (12c) en se basant sur une taux de transmission de données de charge utile utilisé sur la ou les liaisons de charge utile (12c).

2. Appareil de traitement de bande de base (10) selon la revendication 1, dans lequel la ou les liaisons de charge utile (12c) comprennent une liaison montante de charge utile, qui est configurée pour transmettre des données de charge utile à partir de l'appareil de traitement de bande de base (10) et à l'appareil de radiofréquence (50) et dans lequel la ou les liaisons de charge utile (12c) comprennent une liaison descendante de charge utile qui est configurée pour recevoir des données de charge utile en provenance de l'appareil de radiofréquence (50) au niveau de l'appareil de traitement de bande de base (10).

3. Appareil de traitement de bande de base (10) selon l'une des revendications 1 et 2, dans lequel le moyen d'échange (12) est configuré pour transférer des informations de gestion de liaison pour la pluralité de liaisons de communication parallèles sur la liaison de commande (12b) et dans lequel le moyen d'échange (12) est configuré pour transférer des données de charge utile sur la ou les liaisons de charge utile (12c) sans informations d'en-tête.

4. Appareil de traitement de bande de base (10) selon l'une des revendications 1 à 3, configuré en outre pour adapter une puissance utilisée pour communiquer sur la ou les liaisons de charge utile (12c) en se basant sur un rapport d'erreur admissible sur la ou les liaisons de charge utile (12c).

5. Appareil de traitement de bande de base (10) selon l'une des revendications 1 à 4, configuré en outre pour adapter un taux d'erreur sur la ou les liaisons de charge utile (12c) en se basant sur un rapport d'erreur pour une transmission radiofréquence des données de charge utile, et configuré en outre pour adapter un taux d'erreur sur la ou les liaisons de charge utile (12c) en se basant sur une taux de transmission de données de charge utile utilisé sur la ou les liaisons de charge utile (12c).

6. Appareil de radiofréquence (50) pour un modem de communication mobile (100), l'appareil de radiofréquence (50) étant configuré pour traiter des signaux radiofréquences d'un système de communication mobile, l'appareil de radiofréquence (50) comprenant un moyen d'échange (52) de données de charge utile et de données de commande avec un appareil de traitement de bande de base (10), dans lequel le moyen d'échange (52) est configuré pour générer une pluralité de liaisons de communication parallèles pour l'appareil de traitement de bande de base (10),
dans lequel une liaison d'horloge (52a) est configurée pour communiquer un signal d'horloge commun à l'appareil de traitement de bande de base (10) et à l'appareil de radiofréquence (50),
dans lequel une liaison de commande (52b) est configurée pour communiquer des données de commande et
dans lequel une ou plusieurs liaisons de charge utile (52c) sont configurées pour communiquer des données de charge utile entre l'appareil de traitement de bande de base (10) et l'appareil de radiofréquence (50),
dans lequel l'appareil de radiofréquence (59) est en outre configuré pour adapter une puissance utilisée pour communiquer sur la ou les liaisons de charge utile (52c) en se basant sur une taux de transmission de données de charge utile utilisé sur la ou les liaisons de charge utile (52c).

7. Appareil de radiofréquence (50) selon la revendication 6, dans lequel la ou les liaisons de charge utile (52c) comprennent une liaison montante de charge utile, qui est configurée pour transmettre des données de charge utile à partir de l'appareil de traitement de bande de base et à l'appareil de radiofréquence (50) et dans lequel la ou les liaisons de charge utile (52c) comprennent une liaison de liaison descendante de charge utile qui est configurée pour recevoir des données de charge utile en provenance de l'appareil de radiofréquence (50) au niveau de l'appareil de traitement de bande de base (10).

8. Appareil de radiofréquence (50) selon l'une des revendications 6 et 7, dans lequel le moyen d'échange (52) est configuré pour transférer des informations de gestion de liaison pour la pluralité de liaisons de communication parallèles sur la liaison de commande (52b) et dans lequel le moyen d'échange (52) est configuré pour transférer des données de charge utile sur la ou les liaisons de charge utile (52c) sans informations d'entête.

9. Appareil de radiofréquence (50) selon l'une des revendications 6 à 8, configuré en outre pour adapter une puissance utilisée pour communiquer sur la ou les liaisons de charge utile (52c) en se basant sur un rapport d'erreur admissible sur la ou les liaisons de charge utile (52c).

10. Appareil de radiofréquence (50) selon l'une des revendications 6 à 9, configuré en outre pour adapter un taux d'erreur sur la ou les liaisons de charge utile (52c) en se basant sur un rapport d'erreur pour une transmission radiofréquence des données de charge utile, et configuré en outre pour adapter un taux d'erreur sur la ou les liaisons de charge utile (52c) en se basant sur une taux de transmission de données de charge utile utilisé sur la ou les liaisons de charge utile (52c).

11. Modem (100) pour un système de communication mobile comprenant :
• l'appareil de traitement de bande de base (10) selon l'une des revendications 1 à 5 ; et
• l'appareil de radiofréquence (50) selon l'une des revendications 6 à 10.

12. Émetteur-récepteur radio comprenant le modem (100) selon la revendication 11.

13. Terminal mobile comprenant le modem (100) selon la revendication 11.

14. Procédé pour échanger des données entre un appareil de bande de base (10) et un appareil de radiofréquence (50) d'un modem de communication mobile (100), l'appareil de traitement de bande de base (10) étant configuré pour traiter une représentation de bande de base d'un signal radiofréquence, le procédé consiste à échanger (32) des données de charge utile et des données de commande entre l'appareil de traitement de bande de base (10) et l'appareil de radiofréquence (50), le procédé consistant :
à générer (34) une pluralité de liaisons de communication parallèles entre l'appareil de traitement de bande de base (10) et l'appareil de radiofréquence (50),
à communiquer (36) un signal d'horloge commun à l'appareil de traitement de bande de base (10) et à l'appareil de radiofréquence (50) sur une liaison d'horloge (12a ; 52a),
à communiquer (38) des données de commande sur une liaison de commande (12b ; 52b) ; et
à communiquer (40) des données de charge utile sur une ou plusieurs liaisons de charge utile (12c ; 52c)
à adapter une puissance utilisée pour communiquer sur la ou les liaisons de charge utile (52c) en se basant sur une taux de transmission de données de charge utile utilisé sur la ou les liaisons de charge utile (52c).

15. Programme d'ordinateur ayant un code de programme pour réaliser le procédé selon la revendication 14, lorsque le programme d'ordinateur est exécuté sur un ordinateur, un processeur, ou un composant matériel programmable.
